# NEUE EUROPÄISCHE PATENTSCHRIFT

(11) **EP 1 750 960 B2**
(45) Veröffentlichungstag und Bekanntmachung des Hinweises auf die Entscheidung über den Einspruch: **27.05.2015**
(45) Hinweis auf die Patenterteilung: 04.03.2009
(21) Anmeldenummer: 05743148.8
(22) Anmeldetag: 19.05.2005
(51) Int. Cl.: B60J 7/00, B60J 7/043

(54) **FAHRZEUGDACH**
VEHICLE ROOF
TOIT DE VEHICULE

(30) Priorität: 25.05.2004 DE 102004025548
(43) Veröffentlichungstag der Anmeldung: 14.02.2007
(73) Patentinhaber: Webasto SE, 82131 Stockdorf (DE)
(72) Erfinder: HÜBNER, Roland, 80993 München (DE); WULF, Friedhelm, 91325 Adelsdorf/Aisch (DE); POLLAK, Martin, 82178 Puchheim (DE); SCHWAIGHOFER, Ralf, 83115 Neubeuern (DE); MUTTENHAMMER, Rudolf, 82110 Germering (DE); LANG, Andreas, 82140 Olching (DE)
(74) Vertreter: Epping - Hermann - Fischer
(86) Internationale Anmeldenummer: PCT/EP2005/005439
(87) Internationale Veröffentlichungsnummer: WO 2005/115782

(56) Entgegenhaltungen:
- EP-A- 1 277 616
- EP-A- 1 336 520
- EP-A1- 1 336 520
- DE-A1- 3 506 009
- DE-C1- 4 105 389
- DE-U1- 29 814 743
- US-A1- 2002 113 466

## Beschreibung

Die vorliegende Erfindung betrifft ein Fahrzeugdach gemäß dem Oberbegriff der Ansprüche 1, 3, 5 und 6..

Bei derartigen Fahrzeugdächern, bei welchen es sich um Dächer mit festem oder beweglichem Deckel handeln kann, ist die Scheibe üblicherweise eine Glasscheibe, die mittels einem umlaufenden Rahmen mit dem Fahrzeugdach selbst oder mit einer Verstellmechanik zum Verstellen des Deckels verbunden ist. Der Rahmen kann ferner von einer Umschäumung der Scheibe gebildet sein, in die ein metallischer Verstärkungs- oder Halterahmen, beispielsweise ein Deckelinnenblech eingelegt ist. Ein Glasdeckel mit einer Lichtquelle in einer Deckelrandumschäumung ist beispielsweise aus der EP 1 277 616 A1 bekannt.

Abgesehen von Glaselementen werden ferner im Fahrzeugbau, insbesondere für Festelemente, Kunststoffscheiben eingesetzt, die mit einem die Scheibe umgebenden Rahmen verklebt werden.

Während Glasscheiben insofern von Vorteil sind, als sie, insbesondere unter Verwendung von Umschaumungstechniken, leichter zu verarbeiten sind, ist jedoch von Nachteil, dass Glasdeckel ein erhebliches Eigengewicht haben, was nicht nur im Hinblick auf das Gesamtgewicht des Dachaufbäus von Nachteil ist, sondern insbesondere dann, wenn es sich bei dem Deckel um einen beweglichen Deckel handelt, der dann eine entsprechend aufwändigere Ausgestaltung der den Deckel abstützenden Bauteile sowie des Antriebs des Deckels erfordert.

Kunststoffdeckel sind zwar leichter als Glasdeckel, sind jedoch erheblich schwieriger zu montieren als diese. Dies liegt zum einen daran, dass die zur Herstellung von Fahrzeugdachdeckeln verwendeten Kunststoffe in aller Regel thermische Ausdehnungskoeffizienten haben, die erheblich von jenen des metallischen Verstärkungs- und Halterahmens abweichen und daher entsprechende bewegliche Verbindungen zwischen der Scheibe und den Rahmen erfordern, wie dies beispielsweise in DE 101 08 527 erläutert ist.

Anstelle einer entsprechenden beweglichen mechanischen Verbindung wurde versucht, Kunststoffdeckel mittels einer Stoffschlussverbindung mit dem jeweiligen Rahmen zu verbinden. Da bei Kunststoffdeckeln unter Verwendung der bisher gebräuchlichen Materialien wie beispielsweise Polycarbonaten zum Erreichen der im Fahrzeugbau geforderten Stabilität und Beständigkeit des Deckels zusätzlicher Hartstoffschichten auf die Außen- und Innenseite des Deckels aufgebracht werden, die generell einer Verbindung mit anderen Werkstoffen abträglich sind, lässt sich das bei Glasdeckeln eingesetzte Umschäumungsverfahren bisher nicht auf Kunststoffdeckel übertragen, und kommt es auch bei einer Verklebung des Kunststoffdeckels mit dem Rahmen insbesondere aufgrund der bereits benannten großen Unterschiede hinsichtlich der thermischen Ausdehnungskoeffizienten oftmals zu Fehlern und Brüchen in der Verklebung. Zur Ausbildung eines Formschlusses zwischen einer Randumschäumung und einer Scheibe ist in der DE 41 05 389 C1 ein Deckel vorgesehen, der eine im Querschnitt rechteckige Scheibe umfasst, welche an ihrem Außenrand von der Randumschäumung umgriffen wird.

Angesichts der vorstehend geschilderten Probleme ist es Aufgabe der Erfindung, ein Fahrzeugdach der eingangs genannten Art zu schaffen, welches einerseits ein niedriges Gesamtgewicht aufweist und dennoch stabil und einfach zu fertigen ist.

Diese Aufgabe wird gemäß der vorliegenden Erfindung dadurch gelöst, dass bei einem Fahrzeugdach der eingangs genannten Art die Scheibe eine Kunststoffscheibe ist und der Rahmen von einer Umschäumung der Scheibe gebildet wird, wobei die Formgebung der Scheibe im mindestens einem Teilbereich des Verbindungsbereichs zwischen der Scheibe und der Umschäumung so gewählt ist, dass für eine dauerhafte mechanische Verbindung zwischen der Scheibe und der Umschäumung mittels Formschluss gesorgt ist. Auf diese Weise lassen sich die Vorzüge der leichteren Verarbeitbarkeit von Glasdeckeln mit jenen des geringeren Gewichts von Kunststoffdächern vereinen, wobei aufgrund der Formschlussverbindung zwischen der Kunststoffscheibe und der Umschäumung für eine dauerhafte sichere Verbindung zwischen Scheibe und Umschäumung gesorgt ist, die auch aufgrund von äußeren Einflüssen und insbesondere von Wärmeeinflüssen keine Verschlechterung erfährt. Der Formschluss sorgt hierbei für eine permanente und dauerhafte mechanische Verbindung zwischen der Kunststoffscheibe und der Umschäumung unter allen Betriebsbedingungen des Fahrzeugdaches. Da ferner der Formschluss zwischen Scheibe und Umschäumung sich aus der Formgebung der Scheibe selbst ergibt, sind keine zusätzlichen Fertigungs- oder Montageschritte erforderlich, um die Scheibe mit der Umschäumung zu verbinden. Vielmehr werden die Formgebungselemente, die für den Formschluss zwischen Scheibe und Umschäumung sorgen, direkt beim Ausformen der Scheibe in diese einstückig eingeformt. Wird sodann die entsprechend geformte Scheibe in das Umschäumwerkzeug eingebracht und umschäumt, so füllt der Umschäumungswerkstoff die entsprechenden Formgebungselemente und sorgt so für den Formschluss zwischen Scheibe und Umschäumung.

Zur Ausbildung des Formschlusses weist bei einem Fahrzeugdach gemäß Anspruch 1 die Scheibe mindestens eine Ausnehmung auf, in welche die Umschäumung eingreift.

Bei einem Fahrzeugdach gemäß Anspruch 3 weist die Scheibe mindestens eine Erhebung oder einen Vorsprung auf, die bzw. der in die Umschäumung eingebettet ist.

Bei einem Fahrzeugdach gemäß Anspruch 5 weist die Scheibe entlang mindestens einen Teil ihres Seitenrandes einen Hinterschnitt auf, der von der Umschäumung hintergriffen wird.

Bei einem Fahrzeugdach gemäß Anspruch 6 wird die Scheibe entlang mindestens eines Teils ihres Seitenrandes von der Umschäumung umgriffen, wobei in diesem Fall die Scheibe in dem Teil ihres Seitenrandes, in dem sie von der Umschäumung umgriffen wird, einen verringerten Querschnitt aufweist, sodass sich auch im Bereich der Umschäumung eine bündige Dachfläche bewerkstelligen lässt. Zur Verringerung des Querschnitts kann die Scheibe in den Teil ihres Seitenrandes, in welchem sie von der Umschäumung umgriffen wird, eine Fase, eine Absenkung und/oder eine Abschrägung aufweisen.

Es versteht sich, dass sich die vorgenannten Maßnahmen alle miteinander beliebig kombinieren lassen, wobei die Formgebung der Scheibe, die für eine dauerhafte mechanische Verbindung zwischen der Scheibe und der Umschäumung mittels Formschluss sorgt, entweder in mehreren Einzelbereichen der Scheibe vorgesehen ist oder aber als eine sich im Wesentlichen über den gesamten Seitenrand der Scheibe erstreckende Geometrie ausgebildet sein kann.

Bevorzugte Ausgestaltungen der Erfindung ergeben sich aus den Unteransprüchen.

Bei einer bevorzugten Ausgestaltung der Erfindung nach Anspruch 1 ist die Formgebung der Ausnehmung so gewählt, dass diese von der Umschäumung hintergriffen wird. Derartige Ausnehmungen können im Randbereich der Scheibe an deren Ober- und/oder Unterseite sowie an deren Stirnseite vorgesehen sein. Weiterhin kann es sich hierbei um eine Reihe einzelner Ausnehmungen handeln oder aber um eine entlang mindestens einem Bereich des Seitenrandes verlaufende Nut.

Bei einer bevorzugten Ausgestaltung der Erfindung nach Anspruch 3 ist die Formgebung des Vorsprungs so gewählt, dass dieser von der Umschäumung hintergriffen wird. Dies lässt beispielsweise dadurch bewerkstelligen, dass an die Scheibe ein im Wesentlichen L- oder T-förmiger Vorsprung angeformt wird, der, wenn er in die Umschäumung eingebettet ist, nicht nur eine Verschiebebewegung zwischen der Scheibe und der Umschäumung sondern auch ein Voneinander-weg-bewegen von Scheibe und Umschäumung verhindert.

Bei einer bevorzugten Ausgestaltung der Erfindung nach Anspruch 5 weist die Scheibe entlang ihrem Seitenrand eine Ausnehmung oder Nut auf, die sich beim Umschäumen der Scheibe mit Schäumwerkstoff füllt.

In weiterer Ausgestaltung der Erfindung kann die Scheibe eine im Wesentlichen transparenten inneren Bereich sowie einen im Wesentlichen undurchsichtigen Randbereich aufweisen, sodass die Bereiche der Scheibe, in welchen sich Halterungselemente der Scheibe befinden, nach außen hin abgedeckt sind und sich ein einheitliches Äußeres der Scheibe ergibt. Der undurchsichtige Randbereich kann beispielsweise als ein geschwärzter Bereich ausgebildet sein oder als ein Bereich, der farblich an die feste Dachfläche angepasst ist.

Vorzugsweise ist hierbei der im Wesentlichen undurchsichtige Randbereich einstückig an dem im Wesentlichen transparenten inneren Bereich angeformt. Insbesondere kann hierbei die Scheibe von einer im Wesentlichen transparenten Kunststoffscheibe gebildet sein, an die in ihrem Randbereich eine Schicht aus einem im Wesentlichen undurchsichtigen Kunststoff einstückig angeformt ist. Insbesondere kann hierbei die transparente Scheibe so gestaltet sein, dass sie die Dachöffnung im Wesentlichen vollständig überspannt, wobei die Schicht aus im Wesentlichen undurchsichtigem Kunststoff an die Unterseite der transparenten Scheibe angeformt ist. Dabei kann die Scheibe aus einem im Wesentlichen transparenten Polycarbonatwerkstoff gefertigt sein, an die in ihrem Randbereich eine Schicht aus einem im Wesentlichen undurchsichtigen, beispielsweise schwarzen Polycarbonatwerkstoff einstückig angeformt ist. Während es zwar grundsätzlich möglich wäre, den Randbereich der transparenten Kunststoffscheibe beispielsweise durch Auftrag einer Farbschicht einzufärben, wird aus Stabilitätsgründen bevorzugt, die Scheibe in einem zweistufigen Herstellungsverfahren zu fertigen, bei dem in einem ersten Arbeitsschritt die eigentliche Scheibe aus einem transparenten Werkstoff gefertigt wird, an die dann ein Randbereich aus einem im Wesentlichen identischen jedoch andersfarbigen Werkstoff angeformt wird, sodass sich ein einheitliches Bauteil ergibt, das hinsichtlich seiner Stabilität und Weiterverarbeitbarkeit einer aus nur einem Werkstoff gefertigten Scheibe in nichts nachsteht.

Wie bei bekannten im Fahrzeugbau verwendeten Kunststoffscheiben kann die Scheibe an ihrer Außenseite, vorzugsweise auch an ihrer Innenseite, mit einer zusätzlichen Hartstoffschicht, beispielsweise aus Polysiloxan, versehen sein, um die Abriebs- und Kratzbeständigkeit der Scheibe zu erhöhen. Je nach Wahl des verwendeten Materialien kann hierbei die Hartstoffschicht gegebenenfalls auch als Haftvermittler zwischen der Kunststoffscheibe und der Umschäumung dienen.

Weiterhin kann in die Umschäumung ein Verstärkungsrahmen, beispielsweise ein Deckelinnenblech eingelegt sein, wobei hierbei der Außenrand des Deckelinnenblechs in die Umschäumung eingebettet sein kann, während der Innenrand des Deckelinnenblechs gegen die Unterseite der Scheibe anliegt. Um ein Quietschen oder Klappern des freien Innenrands des Deckelinnenblechs gegen die Unterseite der Scheibe auszuschließen, kann zwischen dem inneren Randbereich des Deckelinnenblechs und der Scheibe eine Dämpfungsschicht, beispielsweise eine Gummi-, Moosgummi- oder Textilschicht vorgesehen sein, die beispielsweise auf das Deckelinnenblech mittels Verkleben oder Beflocken aufgebracht ist.

Sollen an dem Deckel weitere Anbauteile aus Metall oder Kunststoff angebracht werden, wie beispielsweise Blenden, Dichtungen, Antennen, Kabelkanäle, Rolloführungen, Antriebskabel oder dergleichen, so können diese direkt in die Umschäumung eingebettet sein. Alternativ oder zusätzlich können in die Umschäumung Halterungen wie z.B. Gewindebuchsen, Hülsen, Halteclipse oder andere Inserts zur Befestigung derartiger Anbauteile eingebettet sein, oder es können in die Umschäumung Ausnehmungen zur Befestigung solcher Anbauteile direkt eingeformt sein. Sollen Anbauteile oder Halterungen für Anbauteile in die Umschäumung eingebettet werden, so können diese direkt beim Schäumen in das Schäumwerkzeug eingelegt und so in die Umschäumung eingebettet werden.

In bekannter Weise kann die Umschäumung aus einem Polyurethanwerkstoff gefertigt sein.

Bevorzugte Ausführungsbeispiele der Erfindung werden nachstehend unter Bezugnahme auf die Zeichnungen näher erläutert. Hierbei zeigen:
- FIG. 1: eine schematische Ansicht eines Fahrzeugs;
- FIG. 2: eine Schnittansicht des Deckels des in FIG. 1 gezeigten Fahrzeugdaches in einem Seitenrandbereich des Deckels;
- FIGN. 3 bis 7: Ansichten ähnlich FIG. 2 von abgewandelten Ausführungsformen des Deckels;
- FIG. 8: eine Aufsicht auf den in FIG. 7 gezeigten Deckel; und
- FIG. 9: eine Ansicht ähnlich FIG. 2 einer weiteren abgewandelten Ausführungsform.

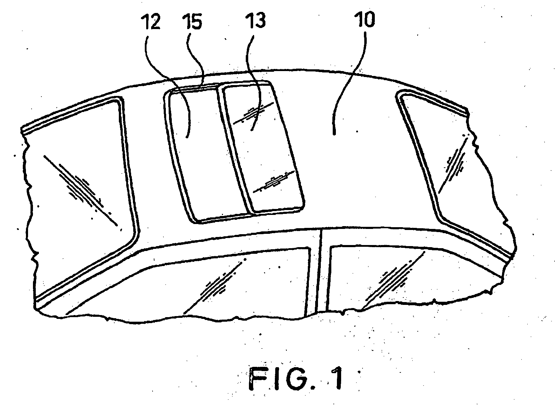

Bei dem in FIG. 1 gezeigten Fahrzeug ist in einer festen Dachfläche 10 eine Dachöffnung 12 vorgesehen. Zum Verschließen der Dachöffnung ist ein Deckel 13 vorgesehen, bei dem es sich im gezeigten Ausführungsbeispiel um ein entlang einen dachfesten Rahmen 15 verschiebbaren Deckel 13 handelt. Die vorliegenden Erfindung findet Anwendung insbesondere auf Dächer mit Festelementen, auf Schiebedächer, Schiebehebedächer, Spoilerdächer, außengeführte Schiebedächer und dergleichen.

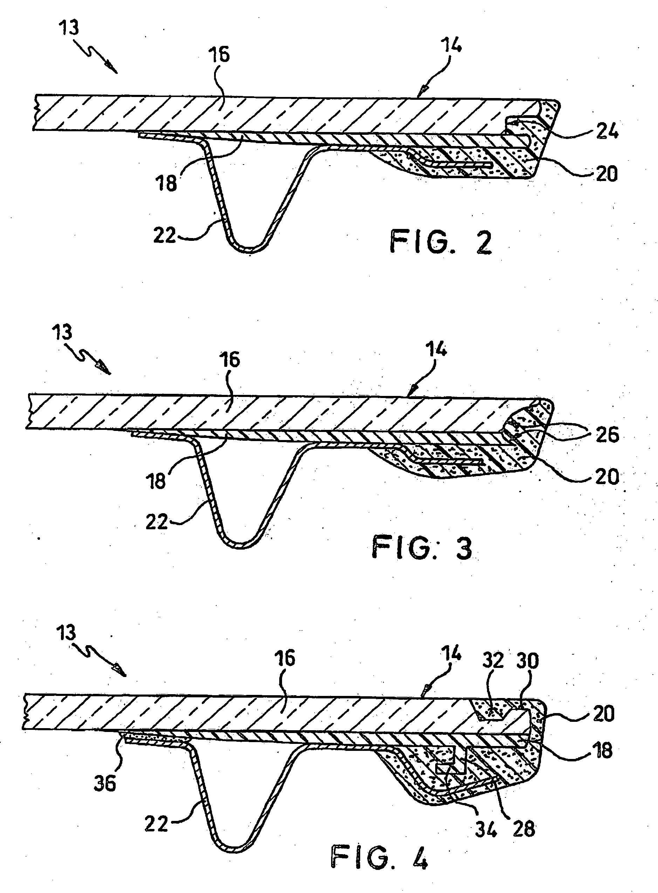

FIG. 2 zeigt den Deckel 13 aus Fig.1 im Bereich seines Seitenrandes. Die den eigentlichen Deckel bildende, die Dachöffnung überdeckende Scheibe 14 besteht hierbei aus einer transparenten Scheibe 16, die beispielsweise aus transparentem Polycarbonat gefertigt ist, an die an deren Unterseite ein Streifen 18 aus nicht-transparentem Werkstoff, beispielsweise schwarzem Polycarbonat, einstückig angeformt ist. Eine derartige Scheibe lässt sich mittels eines zweistufigen Formgebungsverfahrens herstellen, bei dem in ein entsprechendes Formwerkzeug, beispielsweise zuerst der transparente Werkstoff eingebracht wird, an den dann in einem zweiten Schritt eine Lage aus einem im Wesentlichen gleichen jedoch anders farbigen Werkstoff angeformt wird, sodass sich eine einstückige Scheibe aus einheitlichem Werkstoff ergibt. In ihrem Randbereich ist die Scheibe 14 mit einer Umschäumung 20, beispielsweise aus einem Polyurethanwerkstoff, umschäumt, wobei diese Umschäumung vorzugsweise den gesamten Randbereich der Scheibe 14 umlaufend umgibt.

Zum Abstützen der Scheibe 14 und zum Verfahren derselben an einer hier nicht dargestellten Dachmechanik ist ein Rahmen vorgesehen, bei dem es sich wie in FIG. 2 gezeigt um ein Deckelinnenblech 22 handeln kann, welches vorzugsweise beim Umschäumen der Scheibe 14 mit in das Umschäumungswerkzeug eingelegt wird. Auf diese Weise kann das Deckelinnenblech 22 mittels der Umschäumung 20 mit der Scheibe 14 verbunden werden, ohne dass hierfür weitere Fertigungs- oder Montageschritte erforderlich wären.

Bei der in FIG. 2 gezeigten Ausführungsform wird der Formschluss zwischen der Scheibe 14 und der Umschäumung 20 dadurch hergestellt, dass am transparenten Teil 16 der Scheibe 14 entlang deren unteren Seitenrand eine Fase 24 vorgesehen ist, sodass die Scheibe 14 nach Anformen des undurchsichtigen Bereichs 18 an die transparente Scheibe 16 in ihrer Seitenkante eine Nut, vorzugsweise eine umlaufende Nut, aufweist, die sich beim Umschäumen der Scheibe 14 mit Schäumwerkstoff füllt. Analog zu dem hier gezeigten Hinterschnitt der Scheibe 14 könnte diese auch eine Nut in ihrem transparenten Teil 16 aufweisen, oder aber eine Nut, die sich sowohl in den transparenten Teil 16 als auch den nicht-transparenten Teil 18 hinein erstreckt. In jedem Fall erzeugt der Formschluss zwischen Scheibe 14 und Umschäumung 20 eine feste mechanische Anbindung der Scheibe 14 an die Umschäumung 20, die einer Ablösung der Scheibe von der Umschäumung aufgrund hoher mechanischer oder thermischer Beanspruchung wirkungsvoll entgegenwirkt.

FIG. 3 zeigt eine abgewandelte Ausführungsform des Deckels 13 gemäß FIG. 2, wobei hier die aus der transparenten Scheibe 16 und dem nicht-transparenten Bereich 18 gebildete Scheibe 14 entlang ihrem Seitenrand eine umlaufende Einbuchtung 26 aufweist, die mit dem Schäumwerkstoff der Umschäumung 20 gefüllt ist.

Bei der Ausführungsform des erfindungsgemäßen Deckels 13 gemäß FIG. 4 weist die aus der transparenten Kunststoffscheibe 16 und dem einstückig daran angeformten undurchsichtigen Kunststoffbereich 18 gebildete Scheibe 14 einen Randbereich 30 mit verringerter Stärke auf. Zusätzlich ist in dem Bereich mit verringerter Stärke 30 in Abstand zum Außenrand der Scheibe eine Ausnehmung 32 vorgesehen. Der Außenrand der Scheibe 14 ist mit Polyurethanwerkstoff umschäumt, wobei die Umschäumung 20 den Bereich mit verringerter Stärke 30 so umgreift, dass die Oberseite der Umschäumung 20 bündig mit der Oberseite der Scheibe 14 verläuft.

Des Weiteren ist in FIG. 4 eine Ausgestaltung der Scheibe 14 gezeigt, bei der an deren Unterseite ein nach unten abstehender Vorsprung 28 vorgesehen ist, von dem seitlich ein weiterer Vorsprung 34 absteht, sodass sich insgesamt ein generell L-förmiger Vorsprung ergibt, der so in den Schäumwerkstoff eingebettet ist, dass er von dem Schäumwerkstoff hintergriffen wird. Wie bei den vorherigen Ausführungsformen kann auch bei der Ausführungsform gemäß FIG. 4 die Scheibe 14 so gestaltet sein, dass die für einen Formschluss mit der Umschäumung 20 sorgenden Formgebungsmerkmale, hier insbesondere die Ausnehmung 32 sowie der L-förmige Vorsprung 28, 34, in Teilbereichen der Scheibe vorgesehen sind oder aber sich entlang dem gesamten Umfang der Scheibe erstrecken.

In die Umschäumung 20 ist ferner der Außenrand eines Deckelinnenblechs 22 eingebettet, dessen Innenrand von unten gegen die Scheibe 14 anliegt. Um das Deckelinnenblech 22 nach oben hin zu verdecken erstreckt sich der aus einem undurchsichtigen Kunststoff gefertigte Bereich 18 der Scheibe bis knapp über den Innenrand des Deckelinnenblechs 22 hinaus. Zwischen dem Innenrand des Deckelinnenblechs 22 und der Scheibe 14 kann ferner ein Dämpfungsbauteil 36 vorgesehen sein, welches ein Klappern oder Quietschen, das durch eine Relativbewegung zwischen Scheibe und Deckelinnenblech hervorgerufen werden könnte, vermeidet. Bei dieser Dämpfung 36 handelt es sich vorzugsweise um einen auf die Oberseite des Deckelinnenblechs 22 aufgebrachten elastischen Werkstoff, beispielsweise aus Gummi, Moosgummi oder textilen Werkstoffen, beispielsweise um eine Beflockung der Oberseite des Deckelinnenblechs 22.

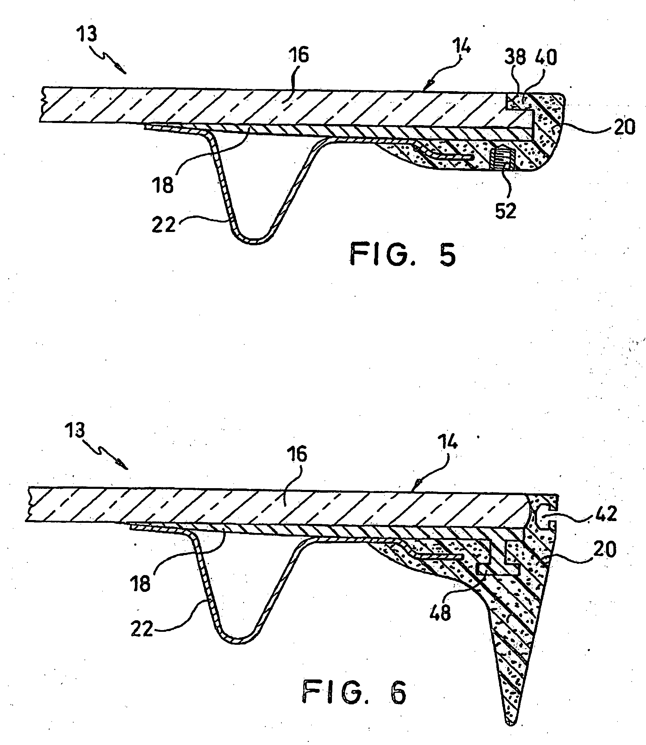

FIG. 5 zeigt eine weitere Ausführungsform eines Deckels 13, bei welchem der Außenrand der Scheibe 14 von der Umschäumung 20 umgriffen wird. Um Platz für ein Umgreifen der Umschäumung 20 zu sorgen und dennoch für eine insgesamt bündige Oberfläche des Deckels 13 zu sorgen, ist entlang dem Außenrand der Scheibe 14 in ihrem transparenten Teil 16 eine Fase 38 vorgesehen, die beim Umschäumen der Scheibe 14 mit Schäumwerkstoff 40 aufgefüllt wird. Sollen an dem Deckel 13 zusätzliche Anbauteile wie beispielsweise Blenden oder Rolloführungen befestigt werden, so können, wie es in FIG. 5 veranschaulicht ist, Halterungen für derartige Anbauteile, beispielsweise Gewindebuchsen 52, direkt in die Umschäumung 20 eingebettet werden. Die Gewindebuchse 52 wurde hierbei beim Umschäumen der Scheibe 14 in das Schäumwerkzeug mit eingelegt, ohne dass zusätzliche Montageschritte erforderlich gewesen wären.

FIG. 6 zeigt eine weitere Ausgestaltung des Deckels 13, bei welchem die transparente Scheibe 16 als Scheibe mit im Wesentlichen gleichförmiger Dicke ausgebildet ist, bei welcher jedoch der einstückig an die Unterseite angeformte Bereich 18 aus nicht-transparenten Werkstoff einen T-förmigen Vorsprung 48 aufweist, der in dem PU-Schäumwerkstoff 20 eingebettet ist. Des Weiteren zeigt FIG. 6 eine Ausgestaltung des Deckels, bei welcher in der Umschäumung 20 seitlich eine Aufnahme 42 vorgesehen ist, um ein Dichtungselement (nicht gezeigt) an dem Deckel zu befestigen. Derartige Aufnahmen, mittels welchen Anbauteile wie Dichtungen, Blenden etc. an den Deckel befestigt werden können, können an beliebigen Stellen der Umschäumung 20 eingeformt sein.

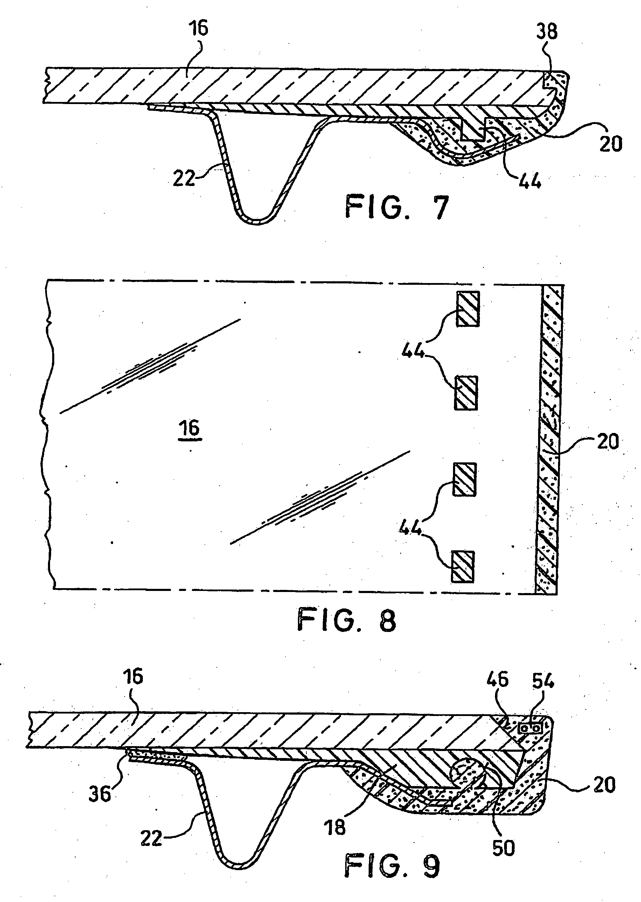

In den FIGN. 7 und 8 ist eine Ausgestaltung des Deckels 13 gezeigt, bei welcher der Formschluss zwischen der Scheibe 14 und der Umschäumung 20 einerseits durch eine entlang dem oberen Außenrand der transparenten Scheibe 16 verlaufende Fase 38 sowie durch eine Mehrzahl von Erhebungen 44 bewerkstelligt wird, die an der Unterseite der Scheibe 14 in deren nicht-transparenten Bereich vorgesehen sind. Wie in FIG. 8 gezeigt, können hierbei die Erhebungen 44 in einer Reihe hintereinander mit gleichmäßigem Abstand zum Seitenrand der Scheibe angeordnet sein.

Zwei weitere Maßnahmen zur Bereitstellung eines Formschlusses der Umschäumung 20 und der Scheibe 14 sind in FIG. 9 dargestellt. Insbesondere ist hierbei der obere Seitenrand der Scheibe 14 in deren transparenten Bereich 16 abgeschrägt, wobei die Scheibe im Bereich der Abschrägung 46 von dem Schäumwerkstoff 20 umgriffen wird. Des Weiteren ist an der Unterseite der Scheibe eine Ausnehmung 50 vorgesehen, deren Innenquerschnitt größer als deren Öffnungsquerschnitt ist und die beim Umschäumen der Scheibe mit Schäumwerkstoff gefüllt wird. Es versteht sich, dass die Ausnehmung 50 nicht wie im gezeigten Beispiel nur innerhalb des nicht-transparenten Bereichs angeordnet zu sein braucht, sondern, da die aus der transparenten Scheibe 16 und dem nicht-transparenten Bereich 18 gebildete Scheibe 14 ein integrales einstückiges Bauteil bildet, sich auch in den transparenten Bereich 16 hineinerstrecken kann. FIG. 9 zeigt ferner eine Ausführungsbeispiel eines Deckels 13, bei welchem ein Anbauteil, hier eine Antenne 54, direkt in die Umschäumung 20 eingebettet ist. Dadurch dass die Antenne 54 beim Umschäumen der Scheibe 14 in einfacher Weise mit in das Schäumwerkzeug eingelegt wird, entfallen zusätzliche Montageschritte.

Außer den vorstehend erläuterten Varianten sind zahlreiche weitere Formgebungsvarianten denkbar, mittels welchen sich für einen Formschluss zwischen Scheibe und Umschäumung sorgen lässt, der die Scheibe selbst dann in allen Raumrichtungen an der Umschäumung hält, wenn die Scheibe hohen wiederholten mechanischen und thermischen Beanspruchungen ausgesetzt wird. Die vorstehend geschilderten Maßnahmen können hierbei beliebig miteinander kombiniert werden.

### Bezugszeichenliste

- 10: feste Dachfläche
- 12: Dachöffnung
- 13: Deckel
- 14: Scheibe
- 15: dachfester Rahmen
- 16: transparente Scheibe
- 18: nicht-transparenter Bereich
- 20: Umschäumung
- 22: Deckelinnenblech
- 24: Hinterschnitt
- 26: Einbuchtung
- 28: Vorsprung
- 30: Absenkung
- 32: Ausnehmung
- 34: L-förmiger Vorsprung
- 36: Dämpfung
- 38: Fase
- 40: Umgriff an 20
- 42: Aufnahme für Dichtung
- 44: Erhebung
- 46: Abschrägung
- 48: T-förmigen Vorsprung
- 50: Ausnehmung
- 52: Gewindebuchse
- 54: Antenne

## Patentansprüche

1. Fahrzeugdach mit einer in einer festen Dachfläche (10) angeordneten Dachöffnung (12) und einem Deckel (13) zum Verschließen der Dachöffnung, wobei der Deckel eine mindestens teilweise transparente Scheibe (14) und einen mit der Scheibe verbundenen Rahmen umfasst, der sich über mindestens einen Teil des Randes der Scheibe erstreckt, wobei die Scheibe (14) eine Kunststoffscheibe ist und der Rahmen von einer Umschäumung (20) der Scheibe gebildet wird, und wobei ferner die Formgebung der Scheibe in mindestens einem Teilbereich des Verbindungsbereichs zwischen der Scheibe und der Umschäumung so gewählt ist, dass für eine dauerhafte mechanische Verbindung zwischen der Scheibe und der Umschäumung mittels Formschluss gesorgt ist, **dadurch gekennzeichnet, dass** die Scheibe (14) mindestens eine Ausnehmung (24, 26, 32, 50) aufweist, in welche die Umschäumung (20) eingreift, in die Umschäumung (20) ein Verstärkungsrahmen eingelegt ist und der Verstärkungsrahmen mittels der Umschäumung (20) mit der Scheibe (14) verbunden ist und die Scheibe (14) einen im Wesentlichen transparenten inneren Bereich sowie einen im Wesentlichen undurchsichtigen Randbereich aufweist, bei welchem der im Wesentlichen undurchsichtige Randbereich (18) einstückig an den im Wesentlichen transparenten inneren Bereich (16) angeformt ist, so dass Bereiche der Scheibe (14), in welchen sich Halterungselemente der Scheibe (14) befinden, nach außen hin abgedeckt sind.

2. Fahrzeugdach nach Anspruch 1, bei welchem die Formgebung der Ausnehmung (24, 26. 50) so gewählt ist, dass diese von der Umschäumung hintergriffen wird.

3. Fahrzeugdach, vorzugsweise nach einem der vorhergehenden Ansprüche, mit einer in einer festen Dachfläche (10) angeordneten Dachöffnung (12) und einem Deckel (13) zum Verschließen der Dachöffnung, wobei der Deckel eine mindestens teilweise transparente Scheibe (14) und einen mit der Scheibe verbundenen Rahmen umfasst, der sich über mindestens einen Teil des Randes der Scheibe erstreckt, wobei die Scheibe (14) eine Kunststoffscheibe ist und der Rahmen von einer Umschäumung (20) der Scheibe gebildet wird, und wobei ferner die Formgebung der Scheibe in mindestens einem Teilbereich des Verbindungsbereichs zwischen der Scheibe und der Umschäumung so gewählt ist, dass für eine dauerhafte mechanische Verbindung zwischen der Scheibe und der Umschäumung mittels Formschluss gesorgt ist, **dadurch gekennzeichnet, dass** die Scheibe (14) mindestens eine Erhebung (44) oder einen Vorsprung (28, 34, 48) aufweist, die oder der in die Umschäumung (20) eingebettet ist, in die Umschäumung (20) ein Verstärkungsrahmen eingelegt ist und der Verstärkungsrahmen mittels der Umschäumung (20) mit der Scheibe (14) verbunden ist und die Scheibe (14) einen im Wesentlichen transparenten inneren Bereich sowie einen im Wesentlichen undurchsichtigen Randbereich aufweist, bei welchem der im Wesentlichen undurchsichtige Randbereich (18) einstückig an den im Wesentlichen transparenten inneren Bereich (16) angeformt ist, so dass Bereiche der Scheibe (14), in welchen sich Halterungselemente der Scheibe (14) befinden, nach außen hin abgedeckt sind.

4. Fahrzeugdach nach Anspruch 3, bei welchem die Scheibe einen Vorsprung (34, 38) aufweist und die Formgebung des Vorsprungs so gewählt ist, dass dieser von der Umschäumung (20) hintergriffen wird.

5. Fahrzeugdach, vorzugsweise nach einem der vorhergehenden Ansprüche, mit einer in einer festen Dachfläche (10) angeordneten Dachöffnung (12) und einem Deckel (13) zum Verschließen der Dachöffnung, wobei der Deckel eine mindestens teilweise transparente Scheibe (14) und einen mit der Scheibe verbundenen Rahmen umfasst, der sich über mindestens einen Teil des Randes der Scheibe erstreckt, wobei die Scheibe (14) eine Kunststoffscheibe ist und der Rahmen von einer Umschäumung (20) der Scheibe gebildet wird, und wobei ferner die Formgebung der Scheibe in mindestens einem Teilbereich des Verbindungsbereichs zwischen der Scheibe und der Umschäumung so gewählt ist, dass für eine dauerhafte mechanische Verbindung zwischen der Scheibe und der Umschäumung mittels Formschluss gesorgt ist, **dadurch gekennzeichnet, dass** die Scheibe (14) entlang mindestens einem Teil ihres Seitenrandes einen Hinterschnitt (24, 26) aufweist, der von der Umschäumung hintergriffen wird, in die Umschäumung (20) ein Verstärkungsrahmen eingelegt ist und der Verstärkungsrahmen mittels der Umschäumung (20) mit der Scheibe (14) verbunden ist und die Scheibe (14) einen im Wesentlichen transparenten inneren Bereich sowie einen im Wesentlichen undurchsichtigen Randbereich aufweist, bei welchem der im Wesentlichen undurchsichtige Randbereich (18) einstückig an den im Wesentlichen transparenten inneren Bereich (16) angeformt ist, so dass Bereiche der Scheibe (14), in welchen sich Halterungselemente der Scheibe (14) befinden, nach außen hin abgedeckt sind, wobei am transparenten Teil (16) der Scheibe (14) entlang deren unteren Seitenrand eine Fase (24) vorgesehen ist, sodass die Scheibe (14) nach Anformen des undurchsichtigen Randbereichs (18) in ihrer Seitenkante eine Nut aufweist, die sich beim Umschäumen der Scheibe (14) mit Schäumwerkstoff füllt.

6. Fahrzeugdach, vorzugsweise nach einem der vorhergehenden Ansprüche, mit einer in einer festen Dachfläche (10) angeordneten Dachöffnung (12) und einem Deckel (13) zum Verschließen der Dachöffnung, wobei der Deckel eine mindestens teilweise transparente Scheibe (14) und einen mit der Scheibe verbundenen Rahmen umfasst, der sich über mindestens einen Teil des Randes der Scheibe erstreckt, wobei die Scheibe (14) eine Kunststoffscheibe ist und der Rahmen von einer Umschäumung (20) der Scheibe gebildet wird, und wobei ferner die Formgebung der Scheibe in mindestens einem Teilbereich des Verbindungsbereichs zwischen der Scheibe und der Umschäumung so gewählt ist, dass für eine dauerhafte mechanische Verbindung zwischen der Scheibe und der Umschäumung mittels Formschluss gesorgt ist, wobei die Scheibe (14) entlang mindestens einem Teil ihres Seitenrandes von der Umschäumung (20) umgriffen wird, **dadurch gekennzeichnet, dass** die Scheibe (14) in dem Teil ihres Seitenrandes, in welchem sie von der Umschäumung umgriffen wird, einen verringerten Querschnitt (30) aufweist, indem sie in dem Teil ihres Seitenrandes, in welchem sie von der Umschäumung (20) umgriffen wird, eine Absenkung (30) aufweist, in die Umschäumung (20) ein Verstärkungsrahmen eingelegt ist und der Verstärkungsrahmen mittels der Umschäumung (20) mit der Scheibe (14) verbunden ist und die Scheibe (14) einen im Wesentlichen transparenten inneren Bereich sowie einen im Wesentlichen undurchsichtigen Randbereich aufweist, bei welchem der im Wesentlichen undurchsichtige Randbereich (18) einstückig an den im Wesentlichen transparenten inneren Bereich (16) angeformt ist, so dass Bereiche der Scheibe (14), in welchen sich Halterungselemente der Scheibe (14) befinden, nach außen hin abgedeckt sind.

7. Fahrzeugdach nach einem der vorhergehenden Ansprüche, bei welchem die Formgebung der Scheibe (14), die für eine dauerhafte mechanische Verbindung zwischen der Scheibe und der Umschäumung (20) mittels Formschluss sorgt, eine sich über im Wesentlichen den gesamten Seitenrandbereich der Scheibe erstreckende Geometrie aufweist.

8. Fahrzeugdach nach einem der vorhergehenden Ansprüche, bei welchem die Scheibe (14) von einer im Wesentlichen transparenten Kunststoffscheibe (16) gebildet ist, an die in ihrem Randbereich eine Schicht (18) aus einem im Wesentlichen undurchsichtigen Kunststoff einstückig angeformt ist.

9. Fahrzeugdach nach Anspruch 8, bei welchem die Schicht (18) aus einem im Wesentlichen undurchsichtigen Kunststoff an die Unterseite der Kunststoffscheibe (16) angeformt ist.

10. Fahrzeugdach nach einem der Ansprüche 8 bis 9, bei welchem die Scheibe (14) aus einem im Wesentlichen transparenten Polycarbonatwerkstoff (16) gefertigt ist, an die in ihrem Randbereich eine Schicht (18) aus einem im Wesentlichen undurchsichtigen Polycarbonatwerkstoff einstückig angeformt ist.

11. Fahrzeugdach nach einem der vorhergehenden Ansprüche, bei welchem die Scheibe (14) an ihrer Außenseite, und vorzugsweise auch an ihrer Innenseite, mit einer zusätzlichen Hartstoffschicht versehen ist.

12. Fahrzeugdach nach einem der vorhergehenden Ansprüche, bei weichem als Verstärkungsrahmen ein Deckelinnenblech (22) vorgesehen ist.

13. Fahrzeugdach nach Anspruch 12, bei welchem der Außenrand des Deckelinnenblechs (22) in die Umschäumung (20) eingebettet ist und der Innenrand des Deckelinnenblechs gegen die Unterseite der Scheibe (14) anlegt.

14. Fahrzeugdach nach Anspruch 13, bei welchem zwischen dem inneren Randbereich des Deckelinnenblechs (22) und der Scheibe (14) eine Dämpfungsschicht (16) vorgesehen ist.

15. Fahrzeugdach nach einem der vorhergehenden Ansprüche, bei welchem in die Umschäumung (20) Anbauteile (54) eingebettet sind.

16. Fahrzeugdach nach einem der vorhergehenden Ansprüche, bei welchem in die Umschäumung (20) Halterungen (52) zur Befestigung von Anbauteilen eingebettet sind.

17. Fahrzeugdach nach einem der vorhergehenden Ansprüche, bei welchem in die Umschäumung (20) Aufnahmen (42) zur Befestigung von Anbauteilen eingeformt sind.

18. Fahrzeugdach nach einem der vorhergehenden Ansprüche, bei welchem die Umschäumung (20) aus einem Polyurethanwerkstoff gefertigt ist.

## Claims

1. Vehicle roof with a roof opening (12) arranged in a fixed roof surface (10) and with a cover (13) for closing the roof opening, wherein the cover comprises an at least partially transparent pane (14) and a frame which is connected to the pane and extends over at least part of the edge of the pane, wherein the pane (14) is a plastic pane and the frame is formed by a foam cladding (20) of the pane, and wherein, furthermore, the shaping of the pane in at least a partial region of the connecting region between the pane and the foam cladding is selected in such a manner that a permanent mechanical connection between the pane and the foam cladding is ensured by means of a form-fitting connection, **characterized in that** the pane (14) has at least one recess (24, 26, 32, 50) in which the foam cladding (20) engages, a reinforcing frame is inserted into the foam cladding (20) and the reinforcing frame is connected to the pane (14) by means of the foam cladding (20), and the pane (14) has an essentially transparent inner region and an essentially opaque edge region, in which the essentially opaque edge region (18) is moulded integrally onto the essentially transparent inner region (16), and therefore regions of the pane (14), in which holding elements of the pane (14) are located, are covered towards the outside.

2. Vehicle roof according to Claim 1, in which the shaping of the recess (24, 26, 50) is selected in such a manner that the foam cladding engages behind said recess.

3. Vehicle roof, preferably according to one of the preceding claims, with a roof opening (12) arranged in a fixed roof surface (10) and with a cover (13) for closing the roof opening, wherein the cover comprises an at least partially transparent pane (14) and a frame which is connected to the pane and extends over at least part of the edge of the pane, wherein the pane (14) is a plastic pane and the frame is formed by a foam cladding (20) of the pane, and wherein, furthermore, the shaping of the pane in at least a partial region of the connecting region between the pane and the foam cladding is selected in such a manner that a permanent mechanical connection between the pane and the foam cladding is ensured by means of a form-fitting connection, **characterized in that** the pane (14) has at least one elevation (44) or a projection (28, 34, 48), said elevation or projection being embedded in the foam cladding (20), a reinforcing frame is inserted into the foam cladding (20) and the reinforcing frame is connected to the pane (14) by means of the foam cladding (20), and the pane (14) has an essentially transparent inner region and an essentially opaque edge region, in which the essentially opaque edge region (18) is moulded integrally onto the essentially transparent inner region (16), and therefore regions of the pane (14), in which holding elements of the pane (14) are located, are covered towards the outside.

4. Vehicle roof according to Claim 3, in which the pane has a projection (34, 38) and the shaping of the projection is selected in such a manner that the foam cladding (20) engages behind said projection.

5. Vehicle roof, preferably according to one of the preceding claims, with a roof opening (12) arranged in a fixed roof surface (10) and with a cover (13) for closing a roof opening, wherein the cover comprises an at least partially transparent pane (14) and a frame which is connected to the pane and extends over at least part of the edge of the pane, wherein the pane (14) is a plastic pane and the frame is formed by a foam cladding (20) of the pane, and wherein, furthermore, the shaping of the pane in at least a partial region of the connecting region between the pane and the foam cladding is selected in such a manner that a permanent mechanical connection between the pane and the foam cladding is ensured by means of a form-fitting connection, **characterized in that** the pane (14) has, along at least part of its side edge, an undercut (24, 26) behind which the foam cladding engages, a reinforcing frame is inserted into the foam cladding (20) and the reinforcing frame is connected to the pane (14) by means of the foam cladding (20), and the pane (14) has an essentially transparent inner region and an essentially opaque edge region, in which the essentially opaque edge region (18) is moulded integrally onto the essentially transparent inner region (16), and therefore regions of the pane (14), in which holding elements of the pane (14) are located, are covered towards the outside, wherein a chamfer (24) is provided on the transparent part (16) of the pane (14) along its lower side edge, and therefore, after the opaque edge region (18) is moulded on, the pane (14) has, in its side edge, a groove which fills with foam material when the pane (14) is being clad with foam.

6. Vehicle roof, preferably according to one of the preceding claims, with a roof opening (12) arranged in a fixed roof surface (10) and with a cover (13) for closing the roof opening, wherein the cover comprises an at least partially transparent pane (14) and a frame which is connected to the pane and extends over at least part of the edge of the pane, wherein the pane (14) is a plastic pane and the frame is formed by a foam cladding (20) of the pane, and wherein, furthermore, the shaping of the pane in at least a partial region of the connecting region between the pane and the foam cladding is selected in such a manner that a permanent mechanical connection between the pane and the foam cladding is ensured by means of a form-fitting connection, **characterized in that** the pane (14) is engaged around, along at least part of its side edge, by the foam cladding (20), **characterized in that** the pane (14), **in that** part of its side edge in which it is engaged around by the foam cladding, has a reduced cross section (30) by having a depression (30) **in that** part of its side edge in which it is engaged around by the foam cladding (20), a reinforcing frame is inserted into the foam cladding (20) and the reinforcing frame is connected to the pane (14) by means of the foam cladding (20), and the pane (14) has an essentially transparent inner region and an essentially opaque edge region, in which the essentially opaque edge region (18) is moulded integrally onto the essentially transparent inner region (16), and therefore regions of the pane (14), in which holding elements of the pane (14) are located, are covered towards the outside.

7. Vehicle roof according to one of the preceding claims, in which the shaping of the pane (14), which ensures a permanent mechanical connection between the pane and the foam cladding (20) by means of a form-fitting connection, has a geometry which extends over essentially the entire side edge region of the pane.

8. Vehicle roof according to one of the preceding claims, in which the pane (14) is formed by an essentially transparent plastic pane (16), onto the edge region of which a layer (18) composed of an essentially opaque plastic is moulded integrally.

9. Vehicle roof according to Claim 8, in which the layer (18) composed of an essentially opaque plastic is moulded onto the lower side of the plastic pane (16).

10. Vehicle roof according to either of Claims 8 and 9, in which the pane (14) is manufactured from an essentially transparent polycarbonate material (16), onto the edge region of which a layer (18) composed of an essentially opaque polycarbonate material is moulded integrally.

11. Vehicle roof according to one of the preceding claims, in which the outside of the pane (14), and preferably also the inside thereof, is provided with an additional layer of hard material.

12. Vehicle roof according to one of the preceding claims, in which an inner cover plate (22) is provided as the reinforcing frame.

13. Vehicle roof according to Claim 12, in which the outer edge of the inner cover plate (22) is embedded into the foam cladding (20) and the inner edge of the inner cover plate bears against the lower side of the pane (14).

14. Vehicle roof according to Claim 13, in which a damping layer (16) is provided between the inner edge region of the inner cover plate (22) and the pane (14).

15. Vehicle roof according to one of the preceding claims, in which add-on parts (54) are embedded into the foam cladding (20).

16. Vehicle roof according to one of the preceding claims, in which holders (52) for the fastening of add-on parts are embedded into the foam cladding (20).

17. Vehicle roof according to one of the preceding claims, in which receptacles (42) for the fastening of add-on parts are moulded into the foam cladding (20).

18. Vehicle roof according to one of the preceding claims, in which the foam cladding (20) is manufactured from a polyurethane material.

## Revendications

1. Toit de véhicule avec une ouverture de toit (12) pratiquée dans une surface de toit solide (10) et avec un couvercle (13) pour fermer l'ouverture de toit, dans lequel le couvercle comprend une vitre au moins partiellement transparente (14) et un cadre assemblé à la vitre, qui s'étend sur au moins une partie du bord de la vitre, dans lequel la vitre (14) est une vitre de matière plastique et le cadre est formé par une mousse périphérique (20) entourant la vitre, et dans lequel le profil de la vitre, dans au moins une zone partielle de la région d'assemblage entre la vitre et la mousse périphérique, est en outre choisi de telle manière qu'il assure un assemblage mécanique durable entre la vitre et la mousse périphérique par un assemblage en complémentarité de forme, **caractérisé en ce que** la vitre (14) présente au moins un évidement (24, 26, 32, 50) dans lequel la mousse périphérique (20) s'engage, un cadre de renforcement est noyé dans la mousse périphérique (20) et la cadre de renforcement est assemblé à la vitre (14) au moyen de la mousse périphérique (20) et la vitre (14) présente une zone intérieure essentiellement transparente ainsi qu'une zone de bord essentiellement opaque, dans lequel la zone de bord essentiellement opaque (18) est formée d'une seule pièce sur la zone intérieure essentiellement transparente (16), de telle sorte que des zones de la vitre (14), dans lesquelles se trouvent des éléments de support de la vitre (14), soient recouvertes vers l'extérieur.

2. Toit de véhicule selon la revendication 1, dans lequel le profil de l'évidement (24, 26, 50) est choisi de telle manière que la mousse périphérique s'y accroche à l'arrière.

3. Toit de véhicule, de préférence selon l'une quelconque des revendications précédentes, avec une ouverture de toit (12) pratiquée dans une surface de toit solide (10) et avec un couvercle (13) pour fermer l'ouverture de toit, dans lequel le couvercle comprend une vitre au moins partiellement transparente (14) et un cadre assemblé à la vitre, qui s'étend sur au moins une partie du bord de la vitre, dans lequel la vitre (14) est une vitre de matière plastique et le cadre est formé par une mousse périphérique (20) entourant la vitre, et dans lequel le profil de la vitre, dans au moins une zone partielle de la région d'assemblage entre la vitre et la mousse périphérique, est en outre choisi de telle manière qu'il assure un assemblage mécanique durable entre la vitre et la mousse périphérique par un assemblage en complémentarité de forme, **caractérisé en ce que** la vitre (14) présente au moins une surélévation (44) ou une saillie (28, 34, 48), qui est noyée dans la mousse périphérique (20), un cadre de renforcement est noyé dans la mousse périphérique (20) et la cadre de renforcement est assemblé à la vitre (14) au moyen de la mousse périphérique (20) et la vitre (14) présente une zone intérieure essentiellement transparente ainsi qu'une zone de bord essentiellement opaque, dans lequel la zone de bord essentiellement opaque (18) est formée d'une seule pièce sur la zone intérieure essentiellement transparente (16), de telle sorte que des zones de la vitre (14), dans lesquelles se trouvent des éléments de support de la vitre (14), soient recouvertes vers l'extérieur.

4. Toit de véhicule selon la revendication 3, dans lequel la vitre présente une saillie (34, 38) et le profil de la saillie est choisi de telle manière que la mousse périphérique (20) accroche celle-ci par l'arrière.

5. Toit de véhicule, de préférence selon l'une quelconque des revendications précédentes, avec une ouverture de toit (12) pratiquée dans une surface de toit solide (10) et avec un couvercle (13) pour fermer l'ouverture de toit, dans lequel le couvercle comprend une vitre au moins partiellement transparente (14) et un cadre assemblé à la vitre, qui s'étend sur au moins une partie du bord de la vitre, dans lequel la vitre (14) est une vitre de matière plastique et le cadre est formé par une mousse périphérique (20) entourant la vitre, et dans lequel le profil de la vitre, dans au moins une zone partielle de la région d'assemblage entre la vitre et la mousse périphérique, est en outre choisi de telle manière qu'il assure un assemblage mécanique durable entre la vitre et la mousse périphérique par un assemblage en complémentarité de forme, **caractérisé en ce que** la vitre (14) présente, le long d'au moins une partie de son bord latéral, une contre-dépouille (24, 26), que la mousse périphérique accroche par l'arrière, un cadre de renforcement est noyé dans la mousse périphérique (20) et la cadre de renforcement est assemblé à la vitre (14) au moyen de la mousse périphérique (20) et la vitre (14) présente une zone intérieure essentiellement transparente ainsi qu'une zone de bord essentiellement opaque, dans lequel la zone de bord essentiellement opaque (18) est formée d'une seule pièce sur la zone intérieure essentiellement transparente (16), de telle sorte que des zones de la vitre (14), dans lesquelles se trouvent des éléments de support de la vitre (14), soient recouvertes vers l'extérieur, un profil (24) étant prévu sur la partie transparente (16) de la vitre (14) le long de son bord latéral inférieur, de telle sorte que la vitre (14) présente une rainure dans son bord latéral après la formation de la zone de bord opaque (18), laquelle rainure se remplit de matériau de mousse lorsque la vitre (14) est entourée de mousse.

6. Toit de véhicule, de préférence selon l'une quelconque des revendications précédentes, avec une ouverture de toit (12) pratiquée dans une surface de toit solide (10) et avec un couvercle (13) pour fermer l'ouverture de toit, dans lequel le couvercle comprend une vitre au moins partiellement transparente (14) et un cadre assemblé à la vitre, qui s'étend sur au moins une partie du bord de la vitre, dans lequel la vitre (14) est une vitre de matière plastique et le cadre est formé par une mousse périphérique (20) entourant la vitre, et dans lequel le profil de la vitre, dans au moins une zone partielle de la région d'assemblage entre la vitre et la mousse périphérique, est en outre choisi de telle manière qu'il assure un assemblage mécanique durable entre la vitre et la mousse périphérique par un assemblage en complémentarité de forme, dans lequel la vitre (14) est enveloppée par la mousse périphérique (20) le long d'au moins une partie de son bord latéral, **caractérisé en ce que** la vitre (14) présente, dans la partie de son bord latéral dans laquelle elle est enveloppée par la mousse périphérique, une section transversale réduite (30), du fait qu'elle présente un retrait (30) dans la partie de son bord latéral dans laquelle elle est enveloppée par la mousse périphérique (20), un cadre de renforcement est noyé dans la mousse périphérique (20) et la cadre de renforcement est assemblé à la vitre (14) au moyen de la mousse périphérique (20) et la vitre (14) présente une zone intérieure essentiellement transparente ainsi qu'une zone de bord essentiellement opaque, dans lequel la zone de bord essentiellement opaque (18) est formée d'une seule pièce sur la zone intérieure essentiellement transparente (16), de telle sorte que des zones de la vitre (14), dans lesquelles se trouvent des éléments de support de la vitre (14), soient recouvertes vers l'extérieur.

7. Toit de véhicule selon l'une quelconque des revendications précédentes, dans lequel le profil de la vitre (14), qui assure un assemblage mécanique durable entre la vitre et la mousse périphérique (20) par complémentarité de forme, présente une géométrie s'étendant essentiellement sur toute la zone du bord latéral de la vitre.

8. Toit de véhicule selon l'une quelconque des revendications précédentes, dans lequel la vitre (14) est formée par une vitre en matière plastique essentiellement transparente (16), sur laquelle une couche (18) en une matière plastique essentiellement opaque est formée d'une seule pièce dans sa zone de bord.

9. Toit de véhicule selon la revendication 8, dans lequel la couche (18) en une matière plastique essentiellement opaque est formée sur la face inférieure de la vitre de matière plastique (16).

10. Toit de véhicule selon l'une quelconque des revendications 8 et 9, dans lequel la vitre (14) est fabriquée en un matériau de polycarbonate essentiellement transparent (16), sur lequel une couche (18) en un matériau de polycarbonate essentiellement opaque est formée d'une seule pièce dans sa zone de bord.

11. Toit de véhicule selon l'une quelconque des revendications précédentes, dans lequel la vitre (14) est pourvue sur sa face extérieure, et de préférence aussi sur sa face intérieure, d'une couche supplémentaire de substance dure.

12. Toit de véhicule selon l'une quelconque des revendications précédentes, dans lequel il est prévu une tôle intérieure de couvercle (22) comme cadre de renforcement.

13. Toit de véhicule selon la revendication 12, dans lequel le bord extérieur de la tôle intérieure de couvercle (22) est noyé dans la mousse périphérique (20) et le bord intérieur de la tôle intérieure de couvercle est appliqué contre la face inférieure de la vitre (14).

14. Toit de véhicule selon la revendication 13, dans lequel il est prévu une couche d'amortissement (16) entre la zone de bord intérieure de la tôle intérieure de couvercle (22) et la vitre (14).

15. Toit de véhicule selon l'une quelconque des revendications précédentes, dans lequel des éléments de montage (54) sont noyés dans la mousse périphérique (20).

16. Toit de véhicule selon l'une quelconque des revendications précédentes, dans lequel des supports (52) pour la fixation d'éléments de montage sont noyés dans la mousse périphérique (20).

17. Toit de véhicule selon l'une quelconque des revendications précédentes, dans lequel des logements (42) permettant la fixation d'éléments de montage sont formés dans la mousse périphérique (20).

18. Toit de véhicule selon l'une quelconque des revendications précédentes, dans lequel la mousse périphérique (20) est fabriquée en un matériau de polyuréthane.
